# EUROPÄISCHE PATENTSCHRIFT

(11) **EP 3 898 233 B1**
(45) Veröffentlichungstag und Bekanntmachung des Hinweises auf die Patenterteilung: **10.04.2024**
(21) Anmeldenummer: 19817788.3
(22) Anmeldetag: 17.12.2019
(51) Int. Cl.: B32B 27/08, B32B 27/20, B32B 27/18, B32B 27/32, B32B 27/30

(54) **FLEXIBLE MEHRSCHICHTFOLIE MIT UV-VIS-SPERRSCHICHT FÜR MEDIZINISCHE VERPACKUNGEN**
FLEXIBLE MULTILAYER FILM WITH UV-VIS BARRIER LAYER FOR MEDICAL PACKAGING
FILM FLEXIBLE MULTICOUCHE POURVU DE COUCHE ÉCRAN CONTRE LES UV VISIBLES POUR EMBALLAGES MÉDICAUX

(30) Priorität: 17.12.2018 EP 18213150
(43) Veröffentlichungstag der Anmeldung: 27.10.2021
(73) Patentinhaber: PolyCine GmbH, 66578 Schiffsweiler (DE)
(72) Erfinder: HOLZER, Susanne, 66564 Ottweiler (DE); GROSS, René, 66538 Neunkirchen (DE)
(74) Vertreter: Rippel, Hans Christoph
(86) Internationale Anmeldenummer: PCT/EP2019/085602
(87) Internationale Veröffentlichungsnummer: WO 2020/127227

(56) Entgegenhaltungen:
- EP-A1- 3 000 750
- DE-A1- 10 361 851

## Beschreibung

Die Erfindung betrifft hitzesterilisierbare Mehrschichtfolien, enthaltend aliphatische Polyolefine, ein Verfahren zu deren Herstellung und deren Verwendung zur Herstellung von medizinischen Verpackungen, sowie medizinische Verpackungen, enthaltend solche Mehrschichtfolien.

Mehrschichtfolien finden seit vielen Jahren ein breites Anwendungsgebiet, z.B. in der Lebensmittel-Industrie aber auch im medizinisch/pharmazeutischen Bereich beispielsweise als Sekundär-Packmittel (Umverpackung) oder Primär-Packmittel für Lösungsbeutel, Trockenkonzentrate und Medikamente in Tablettenform.

Einige Mehrschichtfolien sind zu flexiblen Verpackungen verarbeitbar, welche beispielsweise als Beutel zum Verpacken und zum Verabreichen von medizinischen Lösungen geeignet sind. Als gängige Praxis findet man derzeit medizinische Lösungen z. B. Infusionslösungen für die parenterale Verabreichung, in flexiblen Einwegbeuteln aus Polyvinylchlorid- (PVC) oder non-PVC-Materialien am Markt.

Diese Beutel müssen neben der Fähigkeit zum Kollabieren, das ein vollständiges Auslaufen des Beutels gewährleistet, weitere Leistungskriterien wie Transparenz, Heißsterilisationsfähigkeit bei 121°C, ausreichende mechanische Festigkeit vor allem bei dynamischer Belastung im Schweißnahtbereich, gute Wasserdampfbarriere, Belastungsfähigkeit für übliche Druckmanschettenanwendungen z. B. Druckinfusionen und aus pharmazeutischer Sicht eine möglichst geringe Beeinflussung des Beutelinhalts durch die Verpackung aufweisen.

Entsprechend den genannten Eigenschaften ist es vorteilhaft, eine Mehrschichtfolie mit einem Schichtaufbau auf Basis von Polyolefinen zu wählen. Solche Mehrschichtfolien sind beispielsweise in der DE 103 61 851 A1 beschrieben.

Bestimmte Arzneimittel, wie z.B. Vitamine, Antiinfektiva, Zytostatika, kardiovaskuläre Medikamente, Magen-Darm-Therapeutika, Psychopharmaka und Analgetika, sind insbesondere gegen Licht und UV-Strahlung empfindlich. Wenn solche Medikamente, die lichtgeschützt appliziert werden müssen, unsachgemäß gelagert und verabreicht werden, kann es zu einem Wirkstoffabbau und/oder zur Entstehung toxischer Nebenprodukte kommen, welche die Gesundheit des Patienten beeinträchtigen können.

In der WO 01/53083 A1 ist eine transparente, biaxial orientierte, UV-stabilisierte, siegelbare Folie mit einer Dicke im Bereich von 10 bis 500 µm beschrieben, die als Hauptbestandteil einen kristallisierbaren Thermoplasten enthält, dadurch gekennzeichnet, dass sie zusätzlich mindestens einen im Thermoplasten löslichen UV-Absorber in einer Konzentration von 0,01 Gew.-% bis 5,0 Gew.-% enthält und auf einer Oberfläche mit einer Sperr- oder Barriereschicht zur Verringerung der Gas- und Aromadurchlässigkeit versehen, sowie auf der anderen Oberfläche mit einem Heißsiegellack oder einer Heißsiegelschicht ausgerüstet ist. Der UV-Absorber wird aus der Gruppe der Benzophenone, Benzotriazole, nickelorganischen Verbindungen, Salicylsäureester, Zimtsäureester-Derivate, sterisch gehinderten Amine und Triazine ausgewählt.

In der WO 2009/013529 A1 ist eine Polypropylen-Folie mit mindestens zwei UVabsorbierenden Additiven beschrieben. Das erste anorganische Additiv besteht aus Mineral und/oder Metalloxiden, wie z.B. Nano-Zinkoxid und/oder Nano-Titanoxid (Partikelgröße <200nm) und ist in einer Konzentration von 0,1-5,5 Gew.-% enthalten. Das zweite organische Additiv, ausgewählt aus der Gruppe der Triazine, sterisch gehinderten Amine, Oxanilline, Cyanoacrylate, Benzotriazole und Benzophenone, ist in einer Konzentration von weniger als 2 % enthalten. Der Nachteil dieser Folie besteht unter anderem darin, dass nanoskalige anorganische Additive eingesetzt werden, deren Einsatz aufgrund möglicher Nebenwirkungen umstritten ist.

JP 2014024570 beschreibt ein medizinisches, transparentes Verpackungsmaterial bestehend aus einer Substratschicht, einer Gasbarriereschicht mit Siliciumoxid (SiOx), einer ultraviolett absorbierenden Schicht und einer haftvermittelnden Schicht (Haftvermittler für SiOx). Die ultraviolett absorbierende Schicht enthält einen UV-Absorber und einen fluoreszierenden Aufheller. Der UV-Absorber ist ein Triazin. Der fluoreszierende Aufheller ist ein Stoff oder mehrere Stoffe der Gruppe der Diaminostilben-, Distyrylbiphenyl- und Benzoxazolyl-Thiophen Derivate. Das medizinische Verpackungsmaterial ist als eine Barriere-Umverpackung gedacht.

JP 2016033021 A offenbart einen Behälter, welcher UV-Strahlung im Wellenlängenbereich von 380 bis 400 nm blockiert und sichtbares Licht durchlässt. Hierfür wird eine Triazinverbindung als UV-Absorber eingesetzt. In JP 2016033021 A geht es speziell um eine UV-Barriere und keine Lichtbarriere, im Gegenteil, das sichtbare Licht muss den Behälter ungehindert durchdringen können.

EP 3000750 A1 beschreibt Licht-abschirmende Mehrschichtfolien, die Licht im Wellenbereich bis 400 nm abschirmen und Licht im Wellenbereich darüber durchlassen.

MX 2012014559 beschreibt eine polymerbasierte Folie mit UV-Schutz, die bedingt durch natürliche Chromophore sichtbares blaues und grünes Licht emittiert. Nachteilig bei der beschriebenen Folie in Bezug auf lichtempfindliche Medikamente ist, dass gerade blaues und grünes Licht emittiert wird, welches im für lichtempfindliche Medikamente schädlichen Wellenlängenbereich liegt.

In KR 20170031419 A wird eine Folie mit einer speziellen Wasserdampfbarriere-Schicht und einer UV-Barriere-Schicht beschrieben. Die UV-Barriere wird durch nanoskalige UV-Pigmente wie Zinkoxid oder Titandioxid erreicht und deckt einen Wellenlängenbereich bis 380 nm ab.

CN 205185431 beschreibt eine medizinische Verpackungsfolie bestehend aus einer Aluminiumschicht, die auf einer Seite mit einer antibakteriellen Nano-Silber enthaltenden Schicht ausgerüstet ist und auf der anderen Seite mit einer bedruckbaren Schicht, einer hochtemperaturbeständigen Polyurethan-Klebeschicht und einer mehrfachen UV-abschirmenden Glasbeschichtung ausgestattet ist, die ihrerseits nochmals mit einer Schutzschicht versehen ist. Nachteilig bei dieser Folie ist der komplexe Aufbau mit einer zusätzlich erforderlichen Aluminiumschicht und einer mehrfachen Glasbeschichtung, die ihrerseits eine Schutzschicht erfordert. Die Herstellung der beschriebenen medizinischen Folie ist demnach aufwändig, kostspielig und wenig ressourcenschonend.

EP 3 000 750 A1 offenbart eine lichtabschirmende Mehrschichtfolie für lichtempfindliche Medikamente mit drei oder mehr Schichten aus einer mittleren lichtabschirmenden Polymerschicht (1) zwischen Eluat-blockierenden Schichten A und B.

Die mittlere Polymerschicht (1) ist bevorzugt aus HDPE, LLDPE oder cyclischen Polyolefinen und enthält als lichtabschirmende Substanzen sowohl einen UV-Absorber (Benzotriazol) als auch ein Farbmittel wie Zinkoxid oder ein organisches Pigment wie YELLOW 021. Als Polymere für die Schichten A und B werden bevorzugt cyclische Polyolefine, Polyester oder fluorierte Polymere verwendet.

Obwohl mit den bekannten Folien bereits gute Ergebnisse erzielt werden, bleibt doch ein breiter Raum für Verbesserungen, insbesondere was Folien angeht, die zur Herstellung von medizinischen Verpackungen geeignet sind, welche zur Aufnahme lichtempfindlicher Stoffe dienen sollen.

Aufgabe war es daher, weitere verbesserte Folien zur Herstellung von medizinischen Verpackungen zur Verfügung zu stellen, die insbesondere zur Aufnahme von Lösungen lichtempfindlicher Stoffe geeignet sind und gleichzeitig eine hohe Wasserdampfbarriere aufweisen, was besonders bei geringen Füllvolumen vorteilhaft ist, um den Flüssigkeitsverlust aus der Verpackung während der Lagerung zu minimieren.

Die Aufgabe wird gelöst durch Mehrschichtfolien auf Basis aliphatischer Polyolefine, die in einer mittleren (d.h. auf jeder Seite von mindestens einer weiteren Polymerschicht umgebenen) Polymerschicht eine Kombination aus mindestens einem UV-Absorber und mindestens einem speziellen Farbmittel enthalten.

Gegenstand der Erfindung ist daher eine hitzesterilisierbare Mehrschichtfolie, umfassend
a) eine erste Polymerschicht (A),
b) eine zweite Polymerschicht (B), und
c) eine mittlere Polymerschicht (C),

wobei die mittlere Polymerschicht (C) sich zwischen der ersten Polymerschicht (A) und der zweiten Polymerschicht (B) befindet und
wobei jede der drei Polymerschichten (A), (B) und (C) mindestens ein aliphatisches Polyolefin enthält,
dadurch gekennzeichnet, dass die mittlere Polymerschicht (C) mindestens einen UV-Absorber und mindestens ein Farbmittel aus anorganischen Pigmenten ausgewählt aus der Gruppe bestehend aus
   a) Eisenoxiden, vorzugsweise gelbem oder rotem Eisen(III)-oxid
   b) Zinkferrit-Farbpigmenten,
   c) mit Eisenoxid beschichtetem Glimmer und
   d) Mischphasenoxidpigmenten, vorzugsweise Chrom-Antimon-Titanat und/oder N ickel-Antimon-Titanat
      enthält,
wobei die Kombination aus mindestens einem UV-Absorber und mindestens einem Farbmittel Strahlung im Wellenlängenbereich von 175 nm bis 525 nm absorbiert, und wobei.
   - die erste Polymerschicht (A) mindestens ein Polypropylen-Homopolymer modifiziert mit mindestens einem Impact Modifier umfasst,
   - die zweite Polymerschicht (B) mindestens ein Polypropylen-Terpolymer und/oder Polypropylen-Bipolymer modifiziert mit mindestens einem Impact Modifier umfasst,
      und
   - die mittlere Polymerschicht (C) mindestens ein Polypropylen-Terpolymer modifiziert mit mindestens einem Impact Modifier umfasst; und
   - die mittlere Polymerschicht einen Massenanteil von 70 bis 90 Gew.-% der gesamten Mehrschichtfolie hat.

Ein weiterer Gegenstand der Erfindung ist ein Verfahren zur Herstellung der erfindungsgemäßen Mehrschichtfolie, umfassend einen Schritt, in dem die erste Polymerschicht (A), die mittlere Polymerschicht (C) und die zweite Polymerschicht (B) coextrudiert werden.

Erfindungsgegenstand ist außerdem die Verwendung der erfindungsgemäßen Mehrschichtfolie zur Herstellung einer medizinischen Verpackung.

Die Aufgabe der Erfindung wird ebenfalls durch eine medizinische Verpackung gelöst, welche aus der erfindungsgemäßen Mehrschichtfolie hergestellt ist.

Auch die Verwendung der erfindungsgemäßen medizinischen Verpackung als Behälter für mindestens ein Medikament ist Gegenstand der Erfindung.

Ebenfalls Erfindungsgegenstand ist ein Verfahren zur Herstellung einer erfindungsgemäßen medizinischen Verpackung umfassend die Schritte:
a) Bereitstellen mindestens einer erfindungsgemäßen Mehrschichtfolie;
b) gegebenenfalls Bereitstellen eines oder mehrerer Portelemente und/oder Schläuche;
c) Formen einer Verpackung aus der mindestens einen erfindungsgemäßen Mehrschichtfolie, so dass die zweite Polymerschicht (B) die innere Fläche der Verpackung und die erste Polymerschicht (A) die äußere Fläche der Verpackung bildet;
d) gegebenenfalls Positionieren der Portelemente und/oder Schläuche zwischen den inneren Flächen an den Konturen der Verpackung;
e) in Kontakt Bringen der inneren Flächen an den Konturen der Verpackung miteinander und mit gegebenenfalls dazwischen positionierten Portelementen und/oder Schläuchen; und
f) Verschweißen der inneren Flächen an den Konturen der Verpackung miteinander und mit gegebenenfalls dazwischen positionierten Portelementen und/oder Schläuchen.

Die Erfindung stellt somit eine mit thermisch dauerbeheizten Schweißverfahren auch mit Portelementen sicher verschweißbare und hitzesterilisierbare Mehrschichtfolie auf Polyolefin-Basis zur Verfügung, die ohne Weichmacher auskommt, medizinische Lösungen kaum beeinflusst und eine hohe Wasserdampfbarriere aufweist. Gleichzeitig ist die Mehrschichtfolie auf Polyolefin-Basis mit einem zusätzlichen UV- und Lichtschutz im Bereich von 175nm bis 525nm für lichtempfindliche Medikamente ausgestattet. Da UV-Absorber nur den ultravioletten Bereich des Spektrums bis ∼380 nm abdecken, ist zusätzlich ein Farbpigment für den sichtbaren Bereich des Lichtspektrums bis ∼525 nm enthalten.

Vorzugsweise absorbiert die Kombination aus UV-Absorber und Farbpigment in der erfindungsgemäßen Mehrschichtfolie mindestens 40%, besonders bevorzugt mindestens 60%, ganz besonders bevorzugt mindestens 80% des Lichts im Bereich von 175nm bis 525nm. Gleichzeitig ist die Kombination aus UV-Absorber und Farbpigment vorzugsweise durchlässig für mindestens 40%, besonders bevorzugt für mindestens 60%, ganz besonders bevorzugt für mindestens 80% des Lichts im Bereich oberhalb von 525nm.

Damit kann auf eine Aluminiumbeschichtung bzw. -laminierung verzichtet werden, und die Folie bleibt zur optischen Begutachtung der Infusionslösung transparent oder durchscheinend.

Weiterhin ist keine zusätzliche UV-Beschichtung erforderlich, was einen zusätzlichen Arbeitsschritt und gegebenenfalls eine zusätzliche Schutzschicht einspart.

Des Weiteren werden die Stoffe, die für den UV- und Lichtschutz verantwortlich sind, bei Kontakt der erfindungsgemäßen Mehrschichtfolie oder medizinischen Verpackung mit einem Medikament nicht freigesetzt, so dass eine Kontamination des Wirkstoffs vermieden wird, da diese Stoffe sich in der mittleren Polymerschicht (C) befinden, die von den Schichten (A) und (B) umgeben ist und somit keinen Kontakt mit dem Medikament hat.

Alle drei Polymerschichten (A), (B) und (C) enthalten ein oder mehrere aliphatische Polyolefine.

Bevorzugt als aliphatische Polyolefine sind Polypropylen, Polyethylen, Polybutylen, sowie deren Copolymere, insbesondere Bi- und Terpolymere mit aliphatischen C₂-C₈ Olefinen.

Die erste Polymerschicht (A) der erfindungsgemäßen Mehrschichtfolie stellt definitionsgemäß die Polymerschicht dar, welche bei Verarbeitung der Folie zu einer Verpackung, welche vorzugsweise ein Beutel ist, auf der Außenseite der Verpackung befindlich ist. Demnach ist sie bei der Weiterverarbeitung der Folie zu Verpackungen im direkten Kontakt mit der Oberfläche des Schweißwerkzeuges und benötigt deshalb vorzugsweise eine hohe Schmelz- bzw. Erweichungstemperatur, die bevorzugt oberhalb von 125°C, besonders bevorzugt zwischen 127°C und 150°C, ganz besonders bevorzugt zwischen 130°C und 145°C liegt. Aus diesem Grund umfasst die erste Polymerschicht (A) bevorzugt mindestens ein Polypropylen-Homopolymer, welches zur Verbesserung der Schlagzähigkeit, besonders bei tiefen Temperaturen, mit bis zu 30 Gew.-%, bevorzugt mit 2 bis 20 Gew.-%, besonders bevorzugt 3 bis 10 Gew.-%, insbesondere 5 bis 10 Gew.-% mindestens eines Impact Modifiers modifiziert ist. Ganz besonders bevorzugt besteht die erste Polymerschicht (A) aus einem Polypropylen-Homopolymer, welches mit einem Impact Modifier ausgewählt aus der Gruppe der Styrol-Blockcopolymere, wie z. B. Styrol-Ethylen/Butylen-Blockcopolymere, und/oder aus der Gruppe der Copolymere von Ethylen mit mindestens einem aliphatischen Olefin enthaltend mehr als 3 Kohlenstoffatome, wie z. B. Ethylen-Butylen-Copolymere, modifiziert ist. Insbesondere bevorzugt besteht die erste Polymerschicht (A) aus 90 bis 97 Gew.-% Polypropylen-Homopolymer und 3 bis 10 Gew.-% Styrol-Blockcopolymeren und/oder Copolymeren von Ethylen mit mindestens einem aliphatischen Olefin enthaltend mehr als 3, bevorzugt 4 bis 8 Kohlenstoffatome. In einer bevorzugten Ausführungsform besteht die erste Polymerschicht (A) aus 97 Gew.-% eines Polypropylen-Homopolymers und 3 Gew.-% eines Styrol-Ethylen/Butylen-Blockcopolymers. Die Gewichtsangaben für die Komponenten der ersten Polymerschicht (A) beziehen sich auf das Gesamtgewicht der ersten Polymerschicht (A).

Die zweite Polymerschicht (B) stellt definitionsgemäß die Polymerschicht dar, welche bei Verarbeitung der erfindungsgemäßen Mehrschichtfolie zu einer Verpackung, welche vorzugsweise ein Beutel ist, auf der Innenseite der Verpackung befindlich ist. Diese Polymerschicht ist dafür zuständig, dass die Verpackung durch Verschweißen dicht verschlossen werden kann. Die zweite Polymerschicht (B) der Folie muss mit sich selbst und mit entsprechend eingelegten Portelementen sicher und mit möglichst geringer Temperatur und Schweißzeit verschweißbar und trotzdem bei Temperaturen von mehr als 121°C hitzesterilisierbar sein. Eine niedrige Schweißtemperatur ist besonders wichtig, um die Folienstruktur möglichst wenig mit Gefügespannungen zu belasten. Demnach liegt die Schmelz- bzw. Erweichungstemperatur der zweiten Polymerschicht (B) bevorzugt oberhalb von 121°C, besonders bevorzugt zwischen 122°C und 135°C, besonders bevorzugt zwischen 124°C und 130°C, in jedem Fall aber unterhalb der Schmelz- bzw. Erweichungstemperatur der ersten Polymerschicht (A). Aus diesem Grund umfasst die zweite Polymerschicht (B) der erfindungsgemäßen Mehrschichtfolie bevorzugt mindestens ein Polypropylen-Terpolymer und/oder Polypropylen-Bipolymer, welches zur Verbesserung der Schlagzähigkeit, besonders bei tiefen Temperaturen, mit 5 bis 50 Gew.-%, bevorzugt 10 bis 40 Gew.-%, besonders bevorzugt mit 15 bis 30 Gew.-%, ganz besonders bevorzugt 17 bis 25 Gew.-% mindestens eines Impact Modifiers modifiziert ist. Vorzugsweise besteht die zweite Polymerschicht (B) aus einem Polypropylen-Terpolymer und/oder einem Polypropylen-Bipolymer, welches mit einem Impact Modifier ausgewählt aus Styrol-Blockcopolymeren und/oder Copolymeren von Ethylen mit mindestens einem aliphatischen Olefin enthaltend mehr als 3, bevorzugt 4 bis 8 Kohlenstoffatome modifiziert ist. Insbesondere bevorzugt besteht die zweite Polymerschicht (B) aus 75 bis 83 Gew.-% Polypropylen-Terpolymer und 17 bis 25 Gew.-% Styrol-Blockcopolymeren und/oder Copolymeren von Ethylen mit mindestens einem aliphatischen Olefin enthaltend mehr als 3, bevorzugt 4 bis 8 Kohlenstoffatome. In einer bevorzugten Ausführungsform besteht die zweite Polymerschicht (B) aus 85 Gew.-% eines Polypropylen-Ethylen-Butylen-Terpolymers und 15 Gew.-% eines Styrol-Ethylen/Butylen-Blockcopolymers. In einer weiteren bevorzugten Ausführungsform besteht die zweite Polymerschicht (B) aus 75 Gew.-% eines Polypropylen-Ethylen-Butylen-Terpolymers, 20 Gew.-% eines Styrol-Ethylen/Butylen-Blockcopolymers und 5 Gew.-% eines Ethylen-Octylen-Copolymers. Die Gewichtsangaben für die Komponenten der zweiten Polymerschicht (B) beziehen sich auf das Gesamtgewicht der zweiten Polymerschicht (B).

Die mittlere Polymerschicht (C) hat den größten Massenanteil der Mehrschichtfolie von 70 bis 90 Gew.-%, bevorzugt 75 bis 85 Gew.-% der gesamten Mehrschichtfolie und dient zur Verbesserung der Schlagzähigkeit der gesamten Struktur, sowie der Bereitstellung eines Schutzes gegenüber UV-Strahlung und sichtbarem Licht. Sie umfasst bevorzugt mindestens ein Polypropylen-Terpolymer zu einem Anteil von 15 bis 80 Gew.-%, besonders bevorzugt 20 bis 75 Gew.-%, ganz besonders bevorzugt 25 bis 60 Gew.-%, welches zur Verbesserung der Schlagzähigkeit, besonders bei tiefen Temperaturen, mit bis zu 60 Gew.-%, bevorzugt 5 bis 55 Gew.-%, insbesondere bevorzugt 20 bis 50 Gew.-% mindestens eines Impact Modifiers modifiziert ist. Der Impact Modifier ist bevorzugt ausgewählt aus Styrol-Blockcopolymeren und/oder Copolymeren von Ethylen mit mindestens einem aliphatischen Olefin enthaltend mehr als 3, bevorzugt 4 bis 8 Kohlenstoffatome, und umfasst vorzugsweise ein Styrol-Ethylen/Butylen-Blockcopolymer. Die Gewichtsangaben für die Komponenten der mittleren Polymerschicht (C) beziehen sich auf das Gesamtgewicht der mittleren Polymerschicht (C).

Die mittlere Polymerschicht (C) der erfindungsgemäßen Mehrschichtfolie enthält mindestens einen, bevorzugt 1 bis 4, besonders bevorzugt 1 oder 2, ganz besonders bevorzugt einen UV-Absorber und mindestens ein, bevorzugt 1 bis 4, besonders bevorzugt 1 oder 2, ganz besonders bevorzugt ein Farbmittel aus anorganischen Pigmenten gemäß Anspruch 1, die in Kombination den erforderlichen UV- und Lichtschutz für lichtempfindliche Medikamente im Wellenlängenbereich von 175 nm bis 525 nm gewährleisten. Bevorzugt ist die in der mittleren Polymerschicht (C) enthaltene Menge an UV-Absorber zwischen 0,01 und 10 Gew.-%, besonders bevorzugt zwischen 0,1 und 8 Gew.-%, ganz besonders bevorzugt zwischen 1 und 7 Gew.-%, bezogen auf das Gesamtgewicht der mittleren Polymerschicht (C). Die Menge an Farbmittel liegt bevorzugt zwischen 0,01 und 10 Gew.-%, besonders bevorzugt zwischen 0,1 und 8 Gew.-%, ganz besonders bevorzugt zwischen 1 und 7 Gew.-%, bezogen auf das Gesamtgewicht der mittleren Polymerschicht (C).

In einer bevorzugten Ausführungsform enthalten die Polymerschichten (A) und (B) die bevorzugten Mengen der einzelnen Komponenten.

In einer weiteren bevorzugten Ausführungsform enthalten die Polymerschichten (A) und (C) die bevorzugten Mengen der einzelnen Komponenten.

In einer weiteren bevorzugten Ausführungsform enthalten die Polymerschichten (B) und (C) die bevorzugten Mengen der einzelnen Komponenten.

In einer weiteren bevorzugten Ausführungsform enthalten die Polymerschichten (A), (B) und (C) die bevorzugten Mengen der einzelnen Komponenten.

In einer besonders bevorzugten Ausführungsform enthalten die Polymerschichten (A) und (B) die besonders bevorzugten Mengen der einzelnen Komponenten.

In einer weiteren besonders bevorzugten Ausführungsform enthalten die Polymerschichten (A) und (C) die besonders bevorzugten Mengen der einzelnen Komponenten.

In einer weiteren besonders bevorzugten Ausführungsform enthalten die Polymerschichten (B) und (C) die besonders bevorzugten Mengen der einzelnen Komponenten.

In einer weiteren besonders bevorzugten Ausführungsform enthalten die Polymerschichten (A), (B) und (C) die besonders bevorzugten Mengen der einzelnen Komponenten.

In einer weiteren besonders bevorzugten Ausführungsform enthält die erste Polymerschicht (A) mindestens ein Polypropylen-Homopolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist, und die zweite Polymerschicht (B) mindestens ein aliphatisches Polypropylen-Bipolymer oder ein aliphatisches Polypropylen-Terpolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist.

In einer weiteren besonders bevorzugten Ausführungsform enthält die erste Polymerschicht (A) mindestens ein Polypropylen-Homopolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist, und die mittlere Polymerschicht (C) mindestens ein aliphatisches Polypropylen-Terpolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist.

In einer weiteren besonders bevorzugten Ausführungsform enthält die zweite Polymerschicht (B) mindestens ein aliphatisches Polypropylen-Bipolymer oder ein aliphatisches Polypropylen-Terpolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist, und die mittlere Polymerschicht (C) mindestens ein aliphatisches Polypropylen-Terpolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist.

In einer weiteren besonders bevorzugten Ausführungsform enthält die erste Polymerschicht (A) mindestens ein Polypropylen-Homopolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist, die zweite Polymerschicht (B) mindestens ein aliphatisches Polypropylen-Bipolymer oder ein aliphatisches Polypropylen-Terpolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist, und die mittlere Polymerschicht (C) mindestens ein aliphatisches Polypropylen-Terpolymer, welches zur Verbesserung der Schlagzähigkeit mit einem Styrol-Blockcopolymer und/oder Copolymer von Ethylen mit mindestens einem aliphatischen Olefin enthaltend mehr als 3 Kohlenstoffatome modifiziert ist.

In einer ganz besonders bevorzugten Ausführungsform enthalten die Polymerschichten (A) und (B) die ganz besonders bevorzugten Mengen der einzelnen Komponenten.

In einer weiteren ganz besonders bevorzugten Ausführungsform enthalten die Polymerschichten (A) und (C) die ganz besonders bevorzugten Mengen der einzelnen Komponenten.

In einer weiteren ganz besonders bevorzugten Ausführungsform enthalten die Polymerschichten (B) und (C) die ganz besonders bevorzugten Mengen der einzelnen Komponenten.

In einer weiteren ganz besonders bevorzugten Ausführungsform enthalten die Polymerschichten (A), (B) und (C) die ganz besonders bevorzugten Mengen der einzelnen Komponenten.

In einer weiteren ganz besonders bevorzugten Ausführungsform enthält die erste Polymerschicht (A) ein Polypropylen-Homopolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist, und die zweite Polymerschicht (B) ein aliphatisches Polypropylen-Bipolymer oder ein aliphatisches Polypropylen-Terpolymer, vorzugsweise ein Polypropylen-Ethylen-Butylen-Terpolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist.

In einer weiteren ganz besonders bevorzugten Ausführungsform enthält die erste Polymerschicht (A) ein Polypropylen-Homopolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist, und die mittlere Polymerschicht (C) ein Polypropylen-Ethylen-Butylen-Terpolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist.

In einer weiteren ganz besonders bevorzugten Ausführungsform enthält die zweite Polymerschicht (B) ein aliphatisches Polypropylen-Bipolymer oder ein aliphatisches Polypropylen-Terpolymer, vorzugsweise ein Polypropylen-Ethylen-Butylen-Terpolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist, und die mittlere Polymerschicht (C) ein Polypropylen-Ethylen-Butylen-Terpolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist.

In einer weiteren ganz besonders bevorzugten Ausführungsform enthält die erste Polymerschicht (A) ein Polypropylen-Homopolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist, die zweite Polymerschicht (B) ein aliphatisches Polypropylen-Bipolymer oder ein aliphatisches Polypropylen-Terpolymer, vorzugsweise ein Polypropylen-Ethylen-Butylen-Terpolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist, und die mittlere Polymerschicht (C) ein Polypropylen-Ethylen-Butylen-Terpolymer, welches zur Verbesserung der Schlagzähigkeit mit einem Styrol-Ethylen/Butylen-Blockcopolymer und/oder Copolymer von Ethylen mit mindestens einem aliphatischen Olefin enthaltend 4 bis 8 Kohlenstoffatome modifiziert ist.

Der mindestens eine UV-Absorber ist bevorzugt ausgewählt aus der Gruppe bestehend aus
a) organischen UV-Absorbern, insbesondere Benzophenonen, Benzotriazolen, Oxalaniliden und/oder Phenyltriazinen,
b) anorganischen UV-Absorbern, insbesondere Titandioxid, Eisenoxidpigmenten, Siliziumdioxid und/oder Zinkoxid,
c) polymeren UV-Absorbern, insbesondere PMMA-Mikrokugeln (Polymethylmethacrylat), und
d) HALS (Hindered Amine Light Stabilizers) UV-Absorbern, insbesondere 2,2,6,6-Tetramethylpiperidin-Derivaten, oder
e) einer Kombination aus diesen.

Das mindestens eine Farbmittel ist aus anorganischen Pigmenten, wobei die anorganischen Pigmente ausgewählt sind aus Eisenoxiden, Zinkferrit-Farbpigmenten, mit Eisenoxid beschichtetem Glimmer und Mischphasenoxidpigmenten. Unter den Mischphasenoxidpigmenten sind Chrom-Antimon-Titanat und/oder Nickel-Antimon-Titanat besonders bevorzugt. Die genannten Farbmittel und deren Kombinationen gewährleisten den erforderlichen Lichtschutz im visuellen Bereich des Lichtspektrums bis 525 nm.

In einer bevorzugten Ausführungsform enthält die mittlere Polymerschicht (C) mindestens einen organischen UV-Absorber und mindestens ein anorganisches Pigment.

In einer weiteren bevorzugten Ausführungsform enthält die mittlere Polymerschicht (C) mindestens einen anorganischen UV-Absorber und mindestens ein anorganisches Pigment.

In einer weiteren bevorzugten Ausführungsform enthält die mittlere Polymerschicht (C) mindestens einen polymeren UV-Absorber und mindestens ein anorganisches Pigment.

In einer weiteren bevorzugten Ausführungsform enthält die mittlere Polymerschicht (C) mindestens einen HALS UV-Absorber und mindestens ein anorganisches Pigment.

In einer besonders bevorzugten Ausführungsform enthält die mittlere Polymerschicht (C) Benzophenon, Benzotriazol, Oxalanilid und/oder Phenyltriazin sowie mindestens ein Eisenoxid, Zinkferrit-Farbpigment, mit Eisenoxid beschichtetes Glimmer und/oder Mischphasenoxidpigment.

In einer weiteren besonders bevorzugten Ausführungsform enthält die mittlere Polymerschicht (C) Titandioxid, Eisenoxidpigment, Siliziumdioxid und/oder Zinkoxid, sowie mindestens ein, Zinkferrit-Farbpigment, mit Eisenoxid beschichtetes Glimmer und/oder Mischphasenoxidpigment.

In einer weiteren besonders bevorzugten Ausführungsform enthält die mittlere Polymerschicht (C) PMMA-Mikrokugeln sowie mindestens ein Eisenoxid, Zinkferrit-Farbpigment, mit Eisenoxid beschichtetes Glimmer und/oder Mischphasenoxidpigment.

In einer weiteren besonders bevorzugten Ausführungsform enthält die mittlere Polymerschicht (C) mindestens ein 2,2,6,6-Tetramethylpiperidin-Derivat sowie mindestens ein Eisenoxid, Zinkferrit-Farbpigment, mit Eisenoxid beschichtetes Glimmer und/oder Mischphasenoxidpigment.

In einer ganz besonders bevorzugten Ausführungsform besteht die mittlere Polymerschicht (C) aus 68 Gew.-% eines Polypropylen-Ethylen-Butylen-Terpolymers, 20 Gew.-% eines Styrol-Ethylen/Butylen-Blockcopolymers, 5 Gew.-% eines Polyethylen-Elastomers, beispielsweise aus der Serie Engage der Firma DOW, 4 Gew.-% eines HALS UV-Absorbers und 3 Gew.-% eines gelben Eisen (III)-oxidpigments. In einer weiteren besonders bevorzugten Ausführungsform besteht die mittlere Polymerschicht (C) aus 67 Gew.-% eines Polypropylen-Ethylen-Butylen-Terpolymers, 20 Gew.-% eines Styrol-Ethylen/Butylen-Blockcopolymers, 5 Gew.-% eines Polyethylen-Elastomers, beispielsweise aus der Serie Engage der Firma DOW, 4 Gew.-% eines PMMA UV-Absorbers und 4 Gew.-% eines roten Eisen (III)-oxidpigments.

In einer Ausführungsform ist die erste Polymerschicht (A) eine äußere Polymerschicht der erfindungsgemäßen Mehrschichtfolie. In einer weiteren Ausführungsform ist die zweite Polymerschicht (B) eine äußere Polymerschicht der erfindungsgemäßen Mehrschichtfolie. In einer bevorzugten Ausführungsform sind die erste Polymerschicht (A) und die zweite Polymerschicht (B) äußere Polymerschichten der erfindungsgemäßen Mehrschichtfolie.

Vorzugsweise enthält nur die Polymerschicht (C) UV-Absorber und Farbmittel, d.h. in den Polymerschichten (A) und (B), besonders bevorzugt in der gesamten weiteren Mehrschichtfolie sind kein UV-Absorber und kein Farbmittel enthalten. Ganz besonders bevorzugt besteht die gesamte erfindungsgemäße Mehrschichtfolie nur aus den Polymerschichten (A), (B) und (C).

Ein weiterer Vorteil der erfindungsgemäßen Mehrschichtfolie besteht darin, dass die mittlere Polymerschicht (C) auf beiden Seiten von einer ersten Polymerschicht (A) bzw. einer zweiten Polymerschicht (B) abgedeckt ist, d.h. kein direkter Kontakt der mittleren Polymerschicht (C) und damit der Additive mit der Infusionslösung stattfindet.

Da sich der mindestens eine UV-Absorber und das mindestens eine Farbmittel in der mittleren Polymerschicht (C) befinden, erfolgt zudem keine komplette Durchfärbung der Folie, d.h. die Folie bleibt durchscheinend, so dass die Infusionslösung vor der Verabreichung weiterhin optisch kontrolliert werden kann. Bei dem bevorzugten Einsatz von Pigmenten als Farbmittel besteht zudem der Vorteil, dass diese nicht migrieren und somit keine Kontamination der Infusionslösung durch die Pigmente erfolgen kann.

Vorzugsweise ist keine der Polymerschichten (A), (B) und (C) mit einem weiteren Material enthaltend weitere Additive, insbesondere UV-Absorber und/oder Aluminium beschichtet oder laminiert.

Bevorzugt haften die Polymerschichten (A), (B) und (C) aneinander, ohne dass ein Haftvermittler eingesetzt wird, d.h. die erfindungsgemäße Mehrschichtfolie enthält bevorzugt keinen Haftvermittler. Ferner enthält bevorzugt zumindest die zweite Polymerschicht (B) keine weiteren chemischen Additive, Modifikatoren oder Weichmacher, wie z.B. Mineralöl, wobei ganz besonders bevorzugt keine der Polymerschichten (A), (B), und (C) weitere chemische Additive, Modifikatoren oder Weichmacher enthält. Demnach findet eine möglichst geringfügige Beeinflussung der medizinischen Lösung durch die erfindungsgemäße Mehrschichtfolie als Packmittel während der Sterilisation und der Lagerung statt.

Die physikalischen Eigenschaften der ersten Polymerschicht (A) in Bezug auf die Schlagzähigkeit können besonders bei tiefen Temperaturen deutlich schlechter sein als die der zweiten Polymerschicht (B), sodass eine zu hohe Schichtdicke der ersten Polymerschicht (A) die Eigenschaften der erfindungsgemäßen Mehrschichtfolie negativ beeinflussen kann. Aus diesem Grund beträgt die Schichtdicke der ersten Polymerschicht (A) bevorzugt 0,5 bis 15 %, besonders bevorzugt 1 bis 13 %, ganz besonders bevorzugt 3 bis 11 % der gesamten Folienstärke. Die Schichtdicke der zweiten Polymerschicht (B) beträgt bevorzugt 2 bis 30 %, besonders bevorzugt 4 bis 25 %, ganz besonders bevorzugt 6 bis 20 % der gesamten Folienstärke. Die mittlere Polymerschicht (C) hat den größten Anteil (mindestens 50 % der gesamten Foliendicke) der Mehrschichtfolie und dient zur Verbesserung der Schlagzähigkeit der gesamten Struktur Die Schichtdicke der mittleren Polymerschicht (C) beträgt demnach bevorzugt 55 bis 97,5 %, bevorzugt 62 bis 95 %, ganz besonders bevorzugt 69 bis 91 % der gesamten Folienstärke. Die gesamte Folienstärke beträgt bevorzugt 50 bis 500 µm, besonders bevorzugt 100 bis 400 µm, ganz besonders bevorzugt 150 bis 300 µm.

Ein wichtiges Kriterium für den Einsatz der erfindungsgemäßen Mehrschichtfolie als Primärpackmittel für medizinische Lösungen ist die Sperrwirkung gegen Flüssigkeitsverlust. Durch einen solchen Flüssigkeitsverlust entsteht eine Aufkonzentrierung der Lösungs-Wirkstoffe, der bestimmte Werte nicht überschreiten darf. Der Flüssigkeitsverlust während der Lagerung entscheidet unter anderem über die Haltbarkeitsdauer des Produktes. Die Formulierung der erfindungsgemäßen Mehrschichtfolie wird vorteilhaft so gewählt, dass bei guter Schlagzähigkeit eine sehr gute Wasserdampf-Barriere erzielbar ist. Diese kann insbesondere dadurch erreicht werden, dass die oben aufgeführten Materialien der Polymerschichten (A), (B) und (C) bei der Herstellung der Mehrschichtfolie eingesetzt werden.

Die erfindungsgemäße Mehrschichtfolie wird vorzugsweise durch Coextrusion hergestellt und bevorzugt mit Wasser schockgekühlt. Die Coextrusion kann vorzugsweise derart erfolgen, dass die erfindungsgemäße Mehrschichtfolie in Form einer flachen Folie oder einer Schlauchfolie extrudiert wird, wobei im Fall einer Schlauchfolie die Außenseite aus der ersten Polymerschicht (A) und die Innenseite aus der zweiten Polymerschicht (B) besteht.

Die erfindungsgemäße Mehrschichtfolie kann weiter verarbeitet werden, um beispielsweise medizinische Verpackungen, vorzugsweise medizinische Beutel herzustellen.

Die erfindungsgemäße medizinische Verpackung ist insbesondere als Behälter für mindestens ein Medikament geeignet, wobei aufgrund des gewährleisteten UV- und Lichtschutzes die medizinische Verpackung besonders vorteilhaft als Behälter für UV- und lichtempfindliche Medikamente geeignet ist. In einer bevorzugten Ausführungsform ist die erfindungsgemäße Verpackung in Kammern unterteilt, so dass sie als Behälter für mehrere Medikamente gleichzeitig genutzt werden kann. Dies ist beispielsweise bei solchen Medikamentenkombinationen von Relevanz, die zusammen verabreicht werden müssen, jedoch in Kombination nicht über längere Zeiträume stabil sind, oder bei festen Medikamenten, die in Form einer Lösung oder Suspension verabreicht werden, jedoch in der Lösung oder in der Suspension nicht über längere Zeiträume stabil sind. Durch getrennte Kammern lassen sich die Bestandteile der endgültigen Verabreichungsform getrennt aufbewahren und kurz vor der Verabreichung durch Öffnen der Trennstellen miteinander vermischen.

Ein Verfahren zur Herstellung der erfindungsgemäßen medizinischen Verpackung, bevorzugt eines Beutels, umfasst die Schritte:
a) Bereitstellen mindestens einer erfindungsgemäßen hitzesterilisierbaren Mehrschichtfolie;
b) gegebenenfalls Bereitstellen eines oder mehrerer Portelemente und/oder Schläuche;
c) Formen einer medizinischen Verpackung, bevorzugt eines Beutels, aus der mindestens einen hitzesterilisierbaren Mehrschichtfolie, so dass die zweite Polymerschicht (B) die innere Fläche der medizinischen Verpackung, bevorzugt des Beutels, und die erste Polymerschicht (A) die äußere Fläche der medizinischen Verpackung, bevorzugt des Beutels, bildet;
d) gegebenenfalls Positionieren der Portelemente und/oder Schläuche zwischen den inneren Flächen an den Konturen der medizinischen Verpackung, bevorzugt des Beutels;
e) in Kontakt Bringen der inneren Flächen an den Konturen der medizinischen Verpackung, bevorzugt des Beutels, miteinander und mit gegebenenfalls dazwischen positionierten Portelementen und/oder Schläuchen;
f) Verschweißen der inneren Flächen an den Konturen der medizinischen Verpackung, bevorzugt des Beutels, miteinander und mit gegebenenfalls dazwischen positionierten Portelementen und/oder Schläuchen.

In Schritt a) wird die erfindungsgemäße Mehrschichtfolie vorzugsweise in Form einer Flachfolie oder einer Schlauchfolie bereitgestellt. Abhängig von der bereitgestellten Form der Folie kann sich das weitere Verfahren in bestimmten Einzelheiten unterscheiden.

Abhängig von der Anwendung der erfindungsgemäßen medizinischen Verpackung, bevorzugt des Beutels, können bei dem Verfahren nach der Bereitstellung der erfindungsgemäßen Mehrschichtfolie optional in Schritt b) zusätzliche Elemente, wie beispielsweise Portelemente und/oder Schläuche bereitgestellt werden. Die Bereitstellung dieser Elemente ist beispielsweise dann sinnvoll, wenn die erfindungsgemäße medizinische Verpackung, bevorzugt der Beutel, als fester Bestandteil einer medizinischen Vorrichtung eingesetzt werden soll oder an eine medizinische Vorrichtung angeschlossen werden soll. Das Weglassen des Schritts b) kann beispielsweise sinnvoll sein, wenn die medizinische Verpackung, bevorzugt der Beutel, lediglich der Aufbewahrung eines Medikaments dient und zur Entnahme des Medikaments beispielsweise durch Aufreißen oder Durchstechen mit einer Kanüle beschädigt wird.

In Schritt c) wird die bereitgestellte erfindungsgemäße Mehrschichtfolie in die Form einer medizinischen Verpackung, bevorzugt eines Beutels, gebracht. Wenn in Schritt a) eine Schlauchfolie bereitgestellt wurde, kann das Formen der medizinischen Verpackung, bevorzugt des Beutels, beispielsweise nur das Zuschneiden der Schlauchfolie auf die gewünschte Länge beinhalten, da bereits die zweite Polymerschicht (B) die innere Fläche der Schlauchfolie und die erste Polymerschicht (A) die äußere Fläche der Schlauchfolie bildet. Wenn in Schritt a) eine Flachfolie bereitgestellt wurde, kann in Schritt c) die medizinische Verpackung, bevorzugt der Beutel, beispielsweise aus einem Stück Mehrschichtfolie geformt werden, indem dieses Stück in eine spiegelsymmetrische Form zugeschnitten wird und entlang der Spiegelachse umgeklappt wird, sodass die Ränder der Folie sich deckungsgleich aufeinander legen, mit der zweiten Polymerschicht (B) auf der Innenseite. Alternativ kann die erfindungsgemäße medizinische Verpackung, bevorzugt der Beutel, beispielsweise aus zwei Stücken Flachfolie geformt werden, indem die zwei Stücke zueinander spiegelsymmetrisch zugeschnitten werden und deckungsgleich aufeinandergelegt werden, mit der zweiten Polymerschicht (B) auf der Innenseite. Bei dem Zuschneiden sind rechteckige Formen besonders bevorzugt, da hierdurch der Materialverlust am geringsten und die Verarbeitbarkeit am einfachsten ist. Allerdings sind auch andere Formen möglich, sodass beispielsweise eine medizinische Verpackung, bevorzugt ein Beutel, mit einer ästhetischen Form hergestellt werden kann, die für Kinder ansprechend ist und diese von der eigentlichen Verabreichung eines Medikaments ablenkt.

Abhängig davon, ob in Schritt b) zusätzliche Elemente wie Portelemente und/oder Schläuche bereitgestellt wurden, können diese Elemente in Schritt d) zwischen den inneren Flächen an den Konturen der geformten medizinischen Verpackung, bevorzugt des Beutels, positioniert werden. Im Fall einer Schlauchfolie ist hiermit das Einlegen der zusätzlichen Elemente in die Öffnungen der Schlauchfolie gemeint. Hierbei können die Elemente nur auf zwei einander gegenüberliegenden Seiten der medizinischen Verpackung, bevorzugt des Beutels, positioniert werden. Im Fall einer Flachfolie ist das Einlegen der zusätzlichen Elemente zwischen die in Schritt c) deckungsgleich aufeinander gelegten Ränder des einen oder der mehreren Flachfolienstücke gemeint. Hierbei können die Elemente an beliebigen Stellen entlang der Ränder positioniert werden, bevorzugt höchstens an zwei gegenüberliegenden Rändern.

In Schritt e) werden die inneren Flächen der geformten medizinischen Verpackung, bevorzugt des Beutels, an dessen Konturen miteinander und mit den gegebenenfalls zwischen den inneren Flächen befindlichen zusätzlichen Elementen in Kontakt gebracht, damit diese in Schritt f) durch Zuführen von Hitze und gegebenenfalls mechanischem Druck zusammen verschweißt werden können. Bei dem Verschweißen ist die Temperatur bevorzugt so gewählt, dass sie über dem Schmelz- bzw. Erweichungspunkt der zweiten Polymerschicht (B), jedoch unter dem Schmelz- bzw. Erweichungspunkt der ersten Polymerschicht (A) liegt. Hierdurch kann gewährleistet werden, dass die zweite Polymerschicht (B) an den Konturen der medizinischen Verpackung, bevorzugt des Beutels, schmilzt und diesen dadurch fest und fluiddicht verschließt, während die erste Polymerschicht (A) ihre Form behält und dadurch die Stabilität der medizinischen Verpackung, bevorzugt des Beutels, erhält.

### Definitionen:

Der Begriff "hitzesterilisierbar" bedeutet, dass entsprechende Materialien einer Sterilisation bei erhöhten Temperaturen, vorzugsweise einer Dampfsterilisation unterzogen werden können. Mit der Sterilisation bezeichnet man Verfahren, durch die Materialien und Gegenstände von lebenden Mikroorganismen befreit werden. Den damit erreichten Zustand der Materialien und Gegenstände bezeichnet man als "steril". Bei der Dampfsterilisation der befüllten oder unbefüllten medizinischen Verpackungen verwendet man heißen Wasserdampf zur Sterilisation, welche typischerweise in einem Autoklaven durchgeführt wird. Dabei werden die medizinischen Verpackungen vorzugsweise 20 Minuten auf 121 °C bei 2 bar Druck im Wasserdampf erhitzt. Die Luft im Inneren des Autoklaven wird dabei vollständig durch Wasserdampf ersetzt.

Der Begriff "aliphatisches Polyolefin" bezieht sich auf ein Polyolefin, welches im Wesentlichen aus Kohlenstoffatomen und Wasserstoffatomen besteht, d.h. in den einpolymerisierten Wiederholungseinheiten keine Heteroatome aufweist und keine aromatischen Gruppen enthält. Der Begriff umfasst neben Homopolymeren auch Copolymere, d.h. Polymere, die mindestens zwei unterschiedliche Monomereinheiten enthalten, beispielsweise Bipolymere oder Terpolymere.

Der Begriff "Mehrschichtfolie" bezieht sich auf thermoplastische Materialien in mehreren coextrudierten Polmyerschichten, die miteinander zu einer Folie in Form einer laufenden Bahn oder eines Schlauchs verbunden sind.

Der Begriff "Homopolymer" bezeichnet ein aus einem Monomer hergestelltes Polymer.

Der Begriff "Copolymer" bezeichnet ein aus mindestens zwei verschiedenen Monomeren hergestelltes Polymer.

Der Begriff "Bipolymer" kennzeichnet ein Copolymer, welches aus zwei verschiedenen Monomeren hergestellt ist.

Der Begriff "Terpolymer" kennzeichnet ein Copolymer, welches aus drei verschiedenen Monomeren hergestellt ist.

Der Begriff "Polypropylen-Terpolymer" bezeichnet eine mit zwei zusätzlichen CoMonomeren im Polymerisationsprozess modifizierte Polypropylen-Molekülkette. Bevorzugte zusätzliche Co-Monomere sind Ethylen und/oder C₄-C₁₆ α-Olefine, besonders bevorzugt Ethylen und/oder C₄-C₈ α-Olefine, ganz besonders bevorzugt Ethylen und Butylen.

Der Begriff "Polypropylen-Bipolymer" bezeichnet eine mit einem zusätzlichen CoMonomer im Polymerisationsprozess modifizierte Polypropylen-Molekülkette. Bevorzugte Co-Monomere sind Ethylen oder C₄-C₁₆ α-Olefine, besonders bevorzugt Ethylen oder C₄-C₈ α-Olefine, ganz besonders bevorzugt Ethylen oder Butylen, vorzugsweise Ethylen.

Der Begriff "Polypropylen-Homopolymer" bezeichnet Polymere, die ausschließlich Propylen als Monomer umfassen.

Der Begriff "Polyethylen-Copolymer" bezeichnet Ethylen/α-Olefin-Copolymere, die im Allgemeinen bei der Polymerisation von Ethylen durch ein oder mehrere α-Olefine modifiziert werden, und auch als Polyethylen-Elastomere bezeichnet werden. Ethylen/α-Olefin-Copolymere haben im Allgemeinen einen Dichtebereich von 0,86 bis 0,44 g/cm³. Bevorzugte α-Olefine sind C₃-C₁₆ α-Olefine, besonders bevorzugt C₃-C₁₂ α-Olefine, ganz besonders bevorzugt C₄-C₈ α-Olefine, beispielsweise 1-Buten, 1-Hexen oder 1-Octen.

Der Begriff "Styrol-Blockcopolymere" bezeichnet synthetische thermoplastische Elastomere, wie z.B. Styrol-Ethylen/Butylen-Blockcopolymer und Styrol-Ethylen/Propylen-Blockcopolymer, die gängigerweise zur Schlagzähmodifikation von Polypropylen verwendet werden.

Der Begriff "Polyolefin" bezieht sich auf Olefinpolymere in Form von Homopolymeren von Olefin und Copolymeren von Olefinen, insbesondere Bi- und Terpolymeren von Olefinen und modifizierte Polymere der genannten.

Der Begriff "Schlagzähigkeit" bezeichnet die Eigenschaft eines Werkstoffes einer dynamischen Belastung zu wiederstehen. Nach der Norm DIN EN ISO 180:2013-08 kann die Izod-Schlagzähigkeit von Kunststoffen unter festgelegten Bedingungen gemessen werden.

Der Begriff "Pigment" bezeichnet anorganische oder organische, bunte oder unbunte Farbmittel, d.h. farbgebende Substanzen, die im Gegensatz zu Farbstoffen im Anwendungsmedium praktisch unlöslich sind. Anwendungsmedium ist der Stoff, in den das Pigment eingearbeitet wird, wie z.B. Öle oder Kunststoffe.

Der Begriff "UV-Absorber" bezeichnet chemische Verbindungen, die verschiedenen Materialien, wie z.B. Polymeren, als Schutz gegen Alterung durch UV-Strahlung zugesetzt werden. UV-Absorber funktionieren nach dem Prinzip der Lichtabsorption. Erfindungsgemäß wird zwischen organischen, anorganischen, polymeren UV-Absorbern, sowie HALS-Absorbern (Hindered Amine Light Stabilizers) unterschieden.

Der Begriff "Impact Modifier" bezeichnet polymere Materialien, wie z.B. Styrol-Blockcopolymere und Polyethylen-Elastomere, die durch Einmischung im Schmelzezustand die Schlagzähigkeit des den Impact Modifier umgebenden Polymers verbessern.

Nachfolgend wird die Erfindung anhand von Beispielen näher erläutert, ohne sie dadurch einzuschränken.

### Beispiel 1:

### Erste Polymerschicht (A):

- 97 Gew.-% PP 41 E4 cs278 von Huntsman Corp., USA/ Polypropylen-Homopolymer
- 3 Gew.-% Tuftec H1062 von Asahi, Japan/ Styrol-Ethylen/Butylen-Blockcopolymer

Die genannte Formulierung wurde in einem separaten Compoundierschritt im Schmelzezustand gemischt und für den weiteren Einsatz granuliert.

### Zweite Polymerschicht (B):

- 85 Gew.-% TD 120 BF, Borealis, Östereich/ Terpolymer
- 15 Gew.-% Tuftec H1062 von Asahi, Japan/ Styrol-Ethylen/Butylen-Blockcopolymer

Die genannte Formulierung wurde in einem separaten Compoundierschritt im Schmelzezustand gemischt und für den weiteren Einsatz granuliert.

### Mittlere Polymerschicht (C):

- 68 Gew.-% TD 120 BF, Borealis, Österreich/ Terpolymer
- 20 Gew.-% Tuftec H1062 von Asahi, Japan/ Styrol-Ethylen/Butylen-Blockcopolymer
- 5 Gew.-% Engage 8003, DOW, USA/ Polyethylen-Elastomer
- 4 Gew.-% Luvobatch PP UV5082, Lehmann & Voss, Deutschland/ UV-Absorber
- 3 Gew.-% Eisen(III)-oxid gelb, Produkt 2233, Caesar & Loretz GmbH, Deutschland/ Farbmittel

Die genannte Formulierung wurde in einem separaten Compoundierschritt im Schmelzezustand gemischt und für den weiteren Einsatz granuliert.

Die Folie wurde mit für Polypropylen üblichen Prozessparametern auf einer Blasfolienanlage mit Wasserkühlung coextrudiert.

Die Folie wurde mit einer Gesamtdicke von 200 µm gefertigt, wobei die erste Polymerschicht (A) und zweite Polymerschicht (B) jeweils eine Dicke von 15 µm und die mittlere Polymerschicht (C) eine Dicke von 170 µm aufweist. Die hergestellte Folie ist heiß-dampfsterilisierbar und bereits mit 125°C temperierten Schweißwerkzeugen fest verschweißbar.

### Beispiel 2:

### Erste Polymerschicht (A):

- 97 Gew.-% PP 41 E4 cs278 von Huntsman Corp., USA/Polypropylen-Homopolymer
- 3 Gew.-% Tuftec H1062 von Asahi, Japan/ Styrol-Ethylen/Butylen-Blockcopolymer

Die genannte Formulierung wurde in einem separaten Compoundierschritt im Schmelzezustand gemischt und für den weiteren Einsatz granuliert.

### Zweite Polymerschicht (B):

- 75 Gew.-% TD 120 BF, Borealis, Östereich/ Terpolymer
- 20 Gew.-% Tuftec H1062 von Asahi, Japan/ Styrol-Ethylen/Butylen-Blockcopolymer
- 5 Gew.-% Engage 8003, DOW, USA/ Polyethylen-Elastomer

Die genannte Formulierung wurde in einem separaten Compoundierschritt im Schmelzezustand gemischt und für den weiteren Einsatz granuliert.

### Mittlere Polymerschicht (C):

- 67 Gew.-% TD 120 BF, Borealis, Österreich/ Terpolymer
- 20 Gew.-% Tuftec H1062 von Asahi, Japan/ Styrol-Ethylen/Butylen-Blockcopolymer
- 5 Gew.-% Engage 8003, DOW, USA/ Polyethylen-Elastomer
- 4 Gew.-% CopoBeads PMMA Mikrokugeln (5 µm Durchmesser), Coating Products OHZ e.K., Deutschland/ polymerer UV-Absorber
- 4 Gew.-% Eisen(III)-oxid rot, Produkt 2337, Caesar & Loretz GmbH, Deutschland/ Farbmittel

Die genannte Formulierung wurde in einem separaten Compoundierschritt im Schmelzezustand gemischt und für den weiteren Einsatz granuliert.

Die Folie wurde mit für Polypropylen üblichen Prozessparametern auf einer Blasfolienanlage mit Wasserkühlung coextrudiert.

Die Folie wurde mit einer Gesamtdicke von 200 µm gefertigt, wobei die erste Polymerschicht (A) und zweite Polymerschicht (B) jeweils eine Dicke von 15 µm und die mittlere Polymerschicht (C) eine Dicke von 170 µm aufweist. Die hergestellte Folie ist heißdampfsterilisierbar und bereits mit auf 125°C temperierten Schweißwerkzeugen fest verschweißbar.

## Patentansprüche

1. Hitzesterilisierbare Mehrschichtfolie, umfassend
a) eine erste Polymerschicht (A),
b) eine zweite Polymerschicht (B), und
c) eine mittlere Polymerschicht (C),
wobei die mittlere Polymerschicht (C) sich zwischen der ersten Polymerschicht (A) und der zweiten Polymerschicht (B) befindet und
wobei jede der drei Polymerschichten (A), (B) und (C) mindestens ein aliphatisches Polyolefin enthält,
**dadurch gekennzeichnet, dass** die mittlere Polymerschicht (C) mindestens einen UV-Absorber und mindestens ein Farbmittel aus anorganischen Pigmenten ausgewählt aus der Gruppe bestehend aus
a) Eisenoxiden, vorzugsweise gelbem oder rotem Eisen(III)-oxid
b) Zinkferrit-Farbpigmenten,
c) mit Eisenoxid beschichtetem Glimmer und
d) Mischphasenoxidpigmenten, vorzugsweise Chrom-Antimon-Titanat und/oder Nickel-Antimon-Titanat enthält, wobei die Kombination aus mindestens einem UV-Absorber und mindestens einem Farbmittel Strahlung im Wellenlängenbereich von 175 nm bis 525 nm absorbiert, und wobei
• die erste Polymerschicht (A) mindestens ein Polypropylen-Homopolymer modifiziert mit mindestens einem Impact Modifier umfasst,
• die zweite Polymerschicht (B) mindestens ein Polypropylen-Terpolymer und/oder Polypropylen-Bipolymer modifiziert mit mindestens einem Impact Modifier umfasst, und
• die mittlere Polymerschicht (C) mindestens ein Polypropylen-Terpolymer modifiziert mit mindestens einem Impact Modifier umfasst; und
• die mittlere Polymerschicht einen Massenanteil von 70 bis 90 Gew.-% der gesamten Mehrschichtfolie hat.

2. Hitzesterilisierbare Mehrschichtfolie gemäß Anspruch 1, **dadurch gekennzeichnet, dass** die mittlere Polymerschicht (C) mindestens einen UV-Absorber enthält, ausgewählt aus der Gruppe bestehend aus
a) organischen UV-Absorbern, vorzugsweise Benzophenonen, Benzotriazolen, Oxalaniliden und/oder Phenyltriazinen,
b) anorganischen UV-Absorbern, vorzugsweise Titandioxid, Eisenoxidpigmenten, Siliziumdioxid und/oder Zinkoxid,
c) polymeren UV-Absorbern, vorzugsweise PMMA-Mikrokugeln (Polymethylmethacrylat),
d) HALS (Hindered Amine Light Stabilizers) UV-Absorbern, vorzugsweise 2,2,6,6-Tetramethylpiperidin-Derivaten, und
e) Kombination aus zwei oder mehr UV-Absorbern aus den Gruppen a) bis d).

3. Hitzesterilisierbare Mehrschichtfolie gemäß Anspruch 1 oder 2, **dadurch gekennzeichnet, dass** der mindestens eine Impact Modifier ausgewählt ist aus der Gruppe bestehend aus Styrol-Blockcopolymeren, Polyethylen-Copolymeren und Polyethylen-Elastomeren.

4. Hitzesterilisierbare Mehrschichtfolie gemäß einem der Ansprüche 1 bis 3, **dadurch gekennzeichnet, dass** die Gesamtdicke der Mehrschichtfolie zwischen 50 µm und 500 µm liegt.

5. Hitzesterilisierbare Mehrschichtfolie gemäß einem der Ansprüche 1 bis 4, **dadurch gekennzeichnet, dass** die Mehrschichtfolie eine Flach- oder Schlauchfolie ist.

6. Hitzesterilisierbare Mehrschichtfolie gemäß einem der Ansprüche 1 bis 5, **dadurch gekennzeichnet, dass** zumindest die zweite Polymerschicht (B), bevorzugt die gesamte Mehrschichtfolie frei von chemischen Modifikatoren, Weichmachern und Haftvermittlern ist.

7. Hitzesterilisierbare Mehrschichtfolie gemäß einem der Ansprüche 1 bis 6 bestehend aus den Polymerschichten (A), (B) und (C).

8. Verfahren zur Herstellung einer hitzesterilisierbaren Mehrschichtfolie gemäß einem der Ansprüche 1 bis 7, umfassend einen Schritt, in dem die erste Polymerschicht (A), die mittlere Polymerschicht (C) und die zweite Polymerschicht (B) coextrudiert werden.

9. Verwendung der hitzesterilisierbaren Mehrschichtfolie gemäß einem der Ansprüche 1 bis 7 zur Herstellung einer medizinischen Verpackung, vorzugsweise eines medizinischen Mehrkammer-Beutels.

10. Medizinische Verpackung enthaltend eine hitzesterilisierbare Mehrschichtfolie gemäß einem der Ansprüche 1 bis 7, wobei die medizinische Verpackung vorzugsweise in Kammern unterteilt ist.

11. Verwendung einer medizinischen Verpackung gemäß Anspruch 10 als Behälter für mindestens ein Medikament, wobei das mindestens eine Medikament vorzugsweise gegenüber Licht im Wellenlängenbereich von 175 nm bis 525 nm empfindlich ist.

12. Verfahren zur Herstellung einer medizinischen Verpackung gemäß Anspruch 10 umfassend die Schritte:
a) Bereitstellen mindestens einer hitzesterilisierbaren Mehrschichtfolie gemäß einem der Ansprüche 1 bis 7;
b) gegebenenfalls Bereitstellen eines oder mehrerer Portelemente und/oder Schläuche;
c) Formen einer medizinischen Verpackung aus der mindestens einen hitzesterilisierbaren Mehrschichtfolie, sodass die zweite Polymerschicht (B) die innere Fläche der medizinischen Verpackung und die erste Polymerschicht (A) die äußere Fläche der medizinischen Verpackung bildet;
d) gegebenenfalls Positionieren der Portelemente und/oder Schläuche zwischen den inneren Flächen an den Konturen der medizinischen Verpackung;
e) in Kontakt Bringen der inneren Flächen an den Konturen der medizinischen Verpackung miteinander und mit gegebenenfalls dazwischen positionierten Portelementen und/oder Schläuchen;
f) Verschweißen der inneren Flächen an den Konturen der medizinischen Verpackung miteinander und mit gegebenenfalls dazwischen positionierten Portelementen und/oder Schläuchen.

## Claims

1. A heat-sterilizable multilayer film comprising
a) a first polymer layer (A),
b) a second polymer layer (B), and
c) a central polymer layer (C),
wherein the central polymer layer (C) is situated between the first polymer layer (A) and the second polymer layer (B) and
wherein each of the three polymer layers (A), (B), and (C) comprises at least one aliphatic polyolefin,
**characterized in that** the central polymer layer (C) comprises at least one UV absorber and at least one colorant from inorganic pigments selected from the group consisting of
a) iron oxides, preferably yellow or red iron(III) oxide
b) zinc ferrite color pigments,
c) iron-oxide-coated mica, and
d) mixed-phase oxide pigments, preferably chromium antimony titanate and/or nickel antimony titanate, wherein the combination of at least one UV absorber and at least one colorant absorbs radiation in the 175 nm to 525 nm wavelength range, and wherein
• the first polymer layer (A) comprises at least one polypropylene homopolymer modified with at least one impact modifier,
• the second polymer layer (B) comprises at least one polypropylene terpolymer and/or polypropylene bipolymer modified with at least one impact modifier, and
• the central polymer layer (C) comprises at least one polypropylene terpolymer modified with at least one impact modifier, and
• the central polymer layer has a mass fraction of 70% to 90% by weight of the total multilayer film.

2. The heat-sterilizable multilayer film as claimed in claim 1, **characterized in that** the central polymer layer (C) comprises at least one UV absorber selected from the group consisting of
a) organic UV absorbers, preferably benzophenones, benzotriazoles, oxalanilides, and/or phenyltriazines,
b) inorganic UV absorbers, preferably titanium dioxide, iron oxide pigments, silicon dioxide, and/or zinc oxide,
c) polymeric UV absorbers, preferably PMMA microspheres (polymethyl methacrylate),
d) HALS (hindered amine light stabilizers) UV absorbers, preferably 2,2,6,6-tetramethylpiperidine derivatives, and
e) combination of two or more UV absorbers from groups a) to d).

3. The heat-sterilizable multilayer film as claimed in claim 1 or 2, **characterized in that** the at least one impact modifier is selected from the group consisting of styrene block copolymers, polyethylene copolymers, and polyethylene elastomers.

4. The heat-sterilizable multilayer film as claimed in any of claims 1 to 3, **characterized in that** the total thickness of the multilayer film is between 50 µm and 500 µm.

5. The heat-sterilizable multilayer film as claimed in any of claims 1 to 4, **characterized in that** the multilayer film is a flat or tubular film.

6. The heat-sterilizable multilayer film as claimed in any of claims 1 to 5, **characterized in that** at least the second polymer layer (B), preferably the entire multilayer film, is free from chemical modifiers, plasticizers, and adhesion promoters.

7. The heat-sterilizable multilayer film as claimed in any of claims 1 to 6, consisting of polymer layers (A), (B), and (C).

8. A process for producing a heat-sterilizable multilayer film as claimed in any of claims 1 to 7, comprising a step in which the first polymer layer (A), the central polymer layer (C), and the second polymer layer (B) are coextruded.

9. Use of the heat-sterilizable multilayer film as claimed in any of claims 1 to 7 for producing a medical packaging, preferably a medical multi-chamber bag.

10. A medical packaging comprising a heat-sterilizable multilayer film as claimed in any of claims 1 to 7, wherein the medical packaging is preferably subdivided into chambers.

11. Use of a medical packaging as claimed in claim 10 as a container for at least one medicament, wherein the at least one medicament is preferably sensitive to light in the 175 nm to 525 nm wavelength range.

12. A process for producing a medical packaging as claimed in claim 10 comprising the steps of:
a) providing at least one heat-sterilizable multilayer film as claimed in any of claims 1 to 7;
b) optionally providing one or more port elements and/or tubings;
c) forming a medical packaging from the at least one heat-sterilizable multilayer film, such that the second polymer layer (B) forms the inner surface of the medical packaging and the first polymer layer (A) forms the outer surface of the medical packaging;
d) optionally positioning the port elements and/or tubings between the inner surfaces at the contours of the medical packaging;
e) bringing the inner surfaces at the contours of the medical packaging into contact with one another and with optionally therebetween positioned port elements and/or tubings;
f) welding the inner surfaces at the contours of the medical packaging to one another and to optionally therebetween positioned port elements and/or tubings.

## Revendications

1. Film multicouche stérilisable par la chaleur, comprenant
a) une première couche (A) à base de polymère,
b) une deuxième couche (B) à base de polymère, et
c) une couche médiane (C) à base de polymère,
la couche médiane (C) à base de polymère se trouvant entre la première couche (A) à base de polymère et la deuxième couche (B) à base de polymère et
chacune des trois couches (A), (B) et (C) à base de polymère contenant au moins une polyoléfine aliphatique,
**caractérisé en ce que** la couche médiane (C) à base de polymère contient au moins un absorbeur d'UV et au moins un agent colorant à base de pigments inorganiques choisis dans le groupe constitué par
a) les oxydes de fer, de préférence l'oxyde de fer(III) jaune ou rouge,
b) les pigments colorés de ferrite de zinc,
c) le mica enrobé d'oxyde de fer et
d) les pigments de type oxyde à phase mixte, de préférence le titanate de chrome et antimoine et/ou le titanate de nickel et antimoine, dans lequel l'association d'au moins un absorbeur d'UV et d'au moins un agent colorant absorbe un rayonnement dans la gamme de longueurs d'onde de 175 nm à 525 nm, et dans lequel
• la première couche (A) à base de polymère comprend au moins un homopolymère polypropylène modifié avec au moins un modificateur de la résistance au choc,
• la deuxième couche (B) à base de polymère comprend au moins un terpolymère de polypropylène et/ou un bipolymère de polypropylène modifié(s) avec au moins un modificateur de la résistance au choc,
• la couche médiane (C) à base de polymère comprend au moins un terpolymère de polypropylène modifié avec au moins une modificateur de la résistance au choc ; et
• la couche médiane à base de polymère constitue une proportion en masse de 70 à 90 % en poids du film multicouche total.

2. Film multicouche stérilisable par la chaleur selon la revendication 1, **caractérisé en ce que** la couche médiane (C) à base de polymère contient au moins un absorbeur d'UV choisi dans le groupe constitué par
a) les absorbeurs d'UV organiques, de préférence les benzophénones, oxalanilides et/ou phényltriazines,
b) les absorbeurs d'UV inorganiques, de préférence le dioxyde de titane, les pigments de type oxyde de fer, le dioxyde de silicium et/ou l'oxyde de zinc,
c) les absorbeurs d'UV polymères, de préférence des microsphères de PMMA [poly(méthacrylate de méthyle)],
d) les absorbeurs d'UV HALS (stabilisants de type amine à encombrement stérique), de préférence des dérivés de 2,2,6,6-tétraméthylpipéridine, et
e) une association de deux ou plus de deux absorbeurs d'UV des groupes a) à d).

3. Film multicouche stérilisable par la chaleur selon la revendication 1 ou 2, **caractérisé en ce que** ledit au moins un modificateur de la résistance au choc est choisi dans le groupe constitué par les copolymères à blocs de styrène, les copolymères de polyéthylène et les élastomères polyéthylène.

4. Film multicouche stérilisable par la chaleur selon l'une quelconque des revendications 1 à 3, **caractérisé en ce que** l'épaisseur totale du film multicouche se situe entre 50 µm et 500 pm.

5. Film multicouche stérilisable par la chaleur selon l'une quelconque des revendications 1 à 4, **caractérisé en ce que** le film multicouche est un film plat ou en gaine.

6. Film multicouche stérilisable par la chaleur selon l'une quelconque des revendications 1 à 5, **caractérisé en ce qu'**au moins la deuxième couche (B) à base de polymère, de préférence le film multicouche total, est exempt(e) de modificateurs, plastifiants et promoteurs d'adhérence chimiques.

7. Film multicouche stérilisable par la chaleur selon l'une quelconque des revendications 1 à 6, consistant en les couches (A), (B) et (C) à base de polymère.

8. Procédé pour la production d'un film multicouche stérilisable par la chaleur selon l'une quelconque des revendications 1 à 7, comprenant une étape dans laquelle la première couche (A) à base de polymère, la couche médiane (C) à base de polymère et la deuxième couche (B) à base de polymère sont coextrudées.

9. Utilisation du film multicouche stérilisable par la chaleur selon l'une quelconque des revendications 1 à 7, pour la fabrication d'un emballage médical, de préférence une poche médicale à plusieurs compartiments.

10. Emballage médical comportant un film multicouche stérilisable par la chaleur selon l'une quelconque des revendications 1 à 7, l'emballage médical étant de préférence divisé en compartiments.

11. Utilisation d'un emballage médical selon la revendication 10 en tant que contenant pour au moins un médicament, ledit au moins un médicament étant de préférence sensible à la lumière dans la gamme de longueurs d'onde de 175 nm à 525 nm.

12. Procédé pour la fabrication d'un emballage médical selon la revendication 10, comprenant les étapes :
a) fourniture d'au moins un film multicouche stérilisable par la chaleur selon l'une quelconque des revendications 1 à 7 ;
b) éventuellement fourniture d'un ou de plusieurs éléments d'orifices et/ou tuyaux souples ;
c) mise en forme d'un emballage médical à partir dudit au moins un film multicouche stérilisable par la chaleur, de telle façon que la deuxième couche (B) à base de polymère constitue la face interne de l'emballage médical et la première couche (A) à base de polymère la face externe de l'emballage médical ;
d) éventuellement disposition des éléments d'orifices et/ou tuyaux souples entre les faces internes au niveau des contours de l'emballage médical ;
e) mise en contact des faces internes au niveau des contours de l'emballage médical l'une avec l'autre et avec éventuellement des éléments d'orifices et/ou tuyaux souples placés entre celles-ci ;
f) soudage des faces internes au niveau des contours de l'emballage médical l'une avec l'autre et avec éventuellement des éléments d'orifices et/ou tuyaux souples placés entre celles-ci.
